# EUROPEAN PATENT SPECIFICATION

(11) **EP 1 798 007 B1**
(45) Date of publication and mention of the grant of the patent: **18.06.2008**
(21) Application number: 05025015.8
(22) Date of filing: 16.11.2005
(51) Int. Cl.: B25J 15/04

(54) **Method for changing a tool of an industrial robot and system comprising an industrial robot and a tool**
Verfahren zum Wechseln des Werkzeugs eines Industrieroboters und System mit einem Industrieroboter und einem Werkzeug
Méthode pour changer l'outil d'un robot industriel et système comprenant un robot industriel et un outil

(43) Date of publication of application: 20.06.2007
(73) Proprietor: ABB Research Ltd., 8050 Zürich (CH)
(72) Inventor: Gentzell, Tobias, 724 82 Västeras (SE); Kjellsson, Jimmy, 723 44 Västeras (SE); Frey, Jan-Erik, 723 48 Västeras (SE); Strnad, Martin, 722 46 Västeras (SE)
(74) Representative: Dahlstrand, Björn

(56) References cited:
- EP-A- 1 459 856
- WO-A-20/04030871
- WO-A-20/05059666

## Description

### TECHNICAL FIELD.

The present invention concerns a tool for an industrial robot and a system comprising the industrial robot with the tool. The invention relates to a method for changing a tool used for robot applications, and in particular to a tool comprising a wireless communication means.

### BACKGROUND ART

Many different types of tools exist for use in operations carried out by robots. Common among robot tools are grippers, clamps, jaws, and more specialised tools such as paint spray guns and welding guns. Such tools may be mounted on the last axis of the manipulator or robot (for example in/on the wrist of a robot arm) or on a tool holder arranged at the end of the arm.

Ideally, the tool should have an unlimited degree of freedom, including that it may rotate without limitations. Normally all media, power and control wiring for the tool is collected in one process cabling which may be bundled in a flexible tube. Such a tube may be arranged on the outside of the robot and on the outside of the robot arm holding the tool. Alternatively the tube may be arranged, at least in part, inside the robot arm. Costly, highly flexible wires are used. However, whether arranged outside or inside a robot arm, the fact is that due to complex twisting and repeated bending of the cabling the individual cable parts of the cabling wear out frequently or begin to fail in one way or another. Often the whole cabling has to be replaced.

A robot tool with a contactless power supply is known from, for example, a patent US 4,223,313 entitled Power transfer circuit and assigned to Renault. A robot tool with wireless control and/or data communication between the tool and a robot control unit is known from PCT application SE2004/001752 published as WO 2005/059666 A1 as well as from WO 2004/030871 A1.

However a new problem arises when using a robot tool arranged with wireless I/O nodes for controlling this tool if and when, during operation, that tool is removed, for example in order to exchange it for another tool. During tool change of a tool with a wireless node it is possible that power to the wireless communication unit on the tool is disrupted, thus there is a high probability for causing an error signal in the wireless communication system. It may occur that a wireless communication unit becomes damaged. It may also occur that the power supply to the wireless communication unit of the tool fails for some reason. In any case, communication errors or alarms have the effect of making it difficult or more complex to carry out tool changes, especially automatic tool changes.

Tool changes are time-consuming, may cause production delays and may introduce undesirable variation into task cycles causing for example, variable heating or cooling effects. Automatic tool changes can provide predictable cycle times. It is important that tool changes are carried out in a predictable way so that technical specifications related to quality do not vary and that planned production is not disrupted.

### SUMMARY OF THE INVENTION

An embodiment of the present invention provides an improvement to methods for controlling an industrial robot arranged with at least one arm which is further arranged with a tool comprising a wireless communication member that overcomes the drawbacks of known such robot tools controlled in part by wireless communication. Another embodiment of the present invention provides improvements to methods for controlling an industrial robot arranged with at least one arm arranged with a tool comprising a wireless communication member which wirelessly controlled tool may be changed or exchanged automatically.

According to an aspect of the invention improvements are provided in the form of a control method for a robot arranged with a robot tool equipped with a wireless communication system.

According to another embodiment of the invention improvements are provided in the form of a method for control of a robot with a tool comprising a wireless communication member wherein the robot tool is removable from the robot arm or tool holder and which may also be equipped with a contactless power supply for the tool.

According to another aspect of the invention improvements are provided in the form of a method for control of a robot wherein a tool comprising a wireless communication member also comprises an improved power supply for the robot tool, which power supply may be a wireless or contactless power supply system using e.g. magnetic or electric coupling through the air.

According to another of the invention improvements are provided in the form of a method for control of a robot arranged with a robot tool which is removable from the arm or tool holder of the robot and which comprises a wireless communication member and equipped with a contactless power supply for the tool and the wireless communication system for control of the tool, wherein and/or one or more actuators are comprised in the tool, and/or one or more sensors are mounted on the tool.

According to another embodiment of the invention improvements are provided in the form a method for control of a robot with a tool comprising a wireless communication member wherein a communication error may be checked to determine if a tool change is planned and, if so, to discard the communication error.

One or more embodiments of the invention may be described as comprising a control method for an industrial robot equipped with a wirelessly controlled tool, the method comprising registering at some point in the architecture of the control system information that a tool change will take place. Preferably and not exclusively this comprises providing the information to a wireless base station that the tool change is planned to take place. Providing this information allows the control system, or at least the wireless base station, to "expect" communication loss from a given wireless tool, and thus communication of an error or alarm for this event is prevented. One or more embodiments of the invention further describe that this improvement may conveniently be achieved by reserving a certain field in the communication link between the overlying control system (e.g. robot controller or PLC) and the wireless radio base-station, which field may be reserved for information regarding a tool change. Then, when a tool change is scheduled, the overlying control system sends that information to the radio base station. When the base-station reads information regarding a tool change it "knows" that it will loose contact with a specific node at a time in the near future and can therefore prepare a safe disconnection of the radio-link. This will ensure that a planned tool change is distinguished from an unplanned loss of communication and will give the overlying control system improved control of the wireless system by eliminating alarms or errors due to predictable communication disruptions.

The principal advantage of the invention is that a planned tool change is distinguished from an unplanned loss of wireless communication to the tool. This reduces stoppages or unnecessary alarms/event during tool changes and so provides a way to control the process including the tool change so as to maintain predictable cycles and thereby consistent quality performance.

A removable robot tool with wireless communication means may be fixed to or changed on the robot, preferably in a way that is quick and simple. The purpose of quicker tool changes is that they enable one robot to perform operations requiring a plurality of tools in a single production sequence. This in turn provides a greater number of options for designing a production sequence, and also saves production down-time. It makes it more practical for a robot to change between two or more different tools, for example type-related tools such as welding callipers or pliers, to carry out different types of spot-welding operations on a workpiece during a same or related production sequence. Removable tools may comprise a plurality of type related tools such as the welding pliers described.

Removable tools may also comprise a plurality of different tools which are not type-related ie not all welding tools or gripping fingers etc. Changeable tools may be arranged to cooperate with purpose tool holders, such as those described in US 4,710,093 to Kuka, entitled: Device for the automatic gripping and releasing of a tool holder in a manipulator, which describes a two-part tool holder: a device in US 4,763,401 to Comau, entitled:
Automatic tool-changing device for industrial robots, which may be described as a gripper member located at the end of a robot arm which cooperates with a coupling flange to which a gripper tool is fixed by means of radially extending automatic clamping means: in yet another patent US 4,784,421 to Mecanotron entitled: Interchangeable tool mounting mechanism for robots, are descriptions of describes tool clamping members with means circular-symmetrical devices such as collets, designed to quickly clamp and/or release cylindrical parts of a plurality of tools: and in a patent US 4,980,963 to Dinse entitled: Tool changing apparatus, which describes tool changing by means of a retaining element fixed to the robot arm, using a fixing or locating trunnion to lock or unlock the tool part.

Removable tools, which may also comprise interchangeable, quick change or quick release tools have the advantage that the robot may simply move the manipulator arm bearing the present tool to a storage position (a rack, turntable, holder or the like), release the present tool, move the manipulator arm to a second tool and then engage the second tool. In addition automatic tool changes from one tool to another may be carried out swiftly and accurately. This also leads to the benefit that tool changes without physical human intervention becomes much more feasible, speeding up changes or reducing downtime and eliminating the need for a person to enter the production cell or other area around a robot. Another benefit is that automatic tool changes take place over a predictable and consistent period of time, thus reducing possible quality variations such as those caused by due to heating or cooling effects on materials used, eg adhesive, sealant, paint, or on the work object itself.

The removable or interchangeable tool may also be a contactlessly powered removable tool that may also be fixed to or changed on the robot quickly and simply. A such robot tool with a contactless power supply is described in the PCT application SE2004/001752published as WO 2005/059666 A1. Another advantage of a contactlessly powered embodiment is that there are no electrical power cables that need to be disconnected or re-connected in order to change from one tool to another. There are no electrical power cables running between the robot and tool to which may be damaged or get in the way of a tool change, especially an automatic tool change carried out at least in part by the robot.

Another advantage of arranging a power transmitting part on the industrial robot and a receiving part on the tool is that the additional weight attached to the end of the robot or manipulator arm robot arm is kept very low. The weight may even be less than the weight of a traditional system with cables or involving slip rings. The longitudinal extension of the tool interface is kept small and the tool holder design and dimensions are also simplified in comparison with a more complex swivel joint for conventional robot tools, designed for accommodating data signal lines and power lines as well as air or other process media.

### BRIEF DESCRIPTION OF THE DRAWINGS

Embodiments of the invention will now be described, by way of example only, with particular reference to the accompanying drawings in which:
FIGURE 1 is a schematic diagram for a system with an industrial robot equipped with tool comprising wireless communication according to an embodiment of the invention;
FIGURE 2 is a schematic diagram of an exemplary storage device for holding one or more robot tools;
FIGURE 3 is a flowchart of a method including a step of providing information about a planned tool change within a control system of the system with an industrial robot;
FIGURE 4 is a flowchart of a method for setting an indicator or switch dependent on the planned tool change relative a wireless communication part of the system with an industrial robot according to another embodiment of the invention;
FIGURE 5 is a flowchart of a method for handling an error resulting from a disconnect of a tool arranged with wireless communication, according to another embodiment of the invention.

### DETAILED DESCRIPTION OF THE EMBODIMENTS

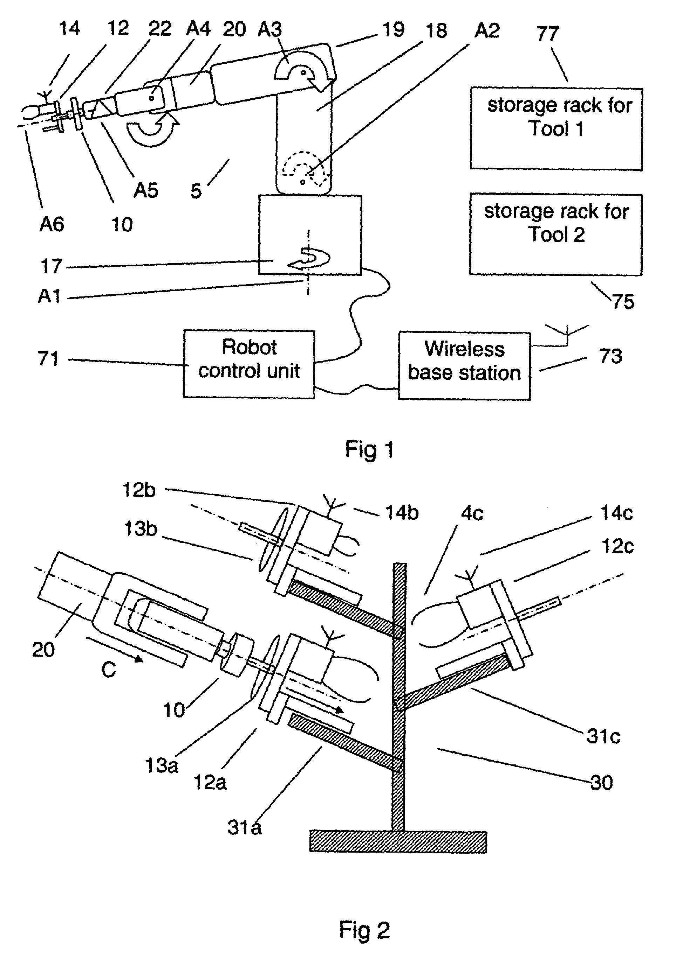

Figure 1 shows an industrial robot equipped with a manipulator arm holding a tool for use in an automation or robotic automation application. The tool and/or the tool holder are arranged so that the tool may be removed. Preferably, such a tool change is also simple and may also be accomplished in a short amount of time. Tool removal or tool changes are preferably and not exclusively carried out automatically.

Figure 1 shows an exemplary example only of an industrial robot 5 arranged on a stand 17 equipped with a manipulator arm. The manipulator arm comprises links 18, 19, and 20 which allow for movement about three axes A2, A3, A4. The robot may rotate around axis A1. The manipulator arm is arranged with a link which rotates around axis A5 and preferably and not exclusively comprises a robot wrist 22. At the end of the arm, or on the wrist, a tool holder 10 may be arranged. A tool 12 is shown mounted on the tool holder, and the tool has an antenna 14 to indicate that the tool is arranged with means for wireless communication of data and/or control signals. Figure 1 also shows a wireless communication unit 73 arranged connected to a robot control unit 71, or for example to an automation control system. The connection may be from the wireless communication unit direct to the robot control unit as shown or via a data network. Wireless communication may be exchanged between the control unit or control system node 73 and a corresponding wireless communication unit 2 arranged on the tool. The illustrated robot is arranged for movement in 6 axes, but embodiments of the invention may be applied to robots having more or less than 6 axes of movement.

FIGURE 2 shows a plurality of robot tools 12a-c each arranged with a wireless communication means 14. Figure 2 shows a stand or tool rack 30 with, in this case, guides or shelves 31 to receive and store wireless tools 12a-c. The stand and shelves are shown cross shaded so that the tool parts are easier to identify. The tools 12a-c each comprise a wireless communication unit 14a-c, and some kind of an actuator or tool such as a, for example, welding pliers 4c. The tools 12a-c may also comprise sensors or actuators (both not shown). Two of the three tools, 12a and 12b, are shown with a contactless power supply receiver described in more detail below, while the third tool 12c is not a contactlessly powered tool.

Figure 2 shows in a simplified way that a wireless tool may be removed from a robot arm. Tool holder 10 on a robot arm eg on link part 20 is moved by the robot arm toward an empty shelf 31a or other tool storage device. A bracket part 11 on the tool is moved along the long axis direction of the tool, shown here as arrow C, the tool is placed on the shelf 31a or other receiving member and then the tool is released by the tool holder when the tool has reached the expected storage position.

Mounting of a wireless tool is in the example described above more or less the reverse operation, ie the tool holder is advanced toward the tool along the long axis C. When the tool holder engages the tool a device (not shown) locks the tool in place on the tool holder. The manipulator arm then moves the tool off the receiving member 31 and away to a work cycle position. Dependent on the tool and on the type of locking device(s), the mounting procedure may not be the same as the reverse of the removal procedure.

The tool 12, 12a-c is used to carry out operations according to a movement control program comprised in a control unit or system such as the robot control unit 71. Instructions are sent using wireless base station 73 to the one or more wireless nodes 14, 14a-c on the tool 12.

The robot control unit or unit in the cell may be a control unit 71 connected to a wireless base station or wireless unit 73 or may be a self contained control unit comprising a built-in wireless transceiver unit (not shown). Other control units (not shown) may also be present in the production cell, automation unit or other system containing the robot, for example one or more simple controllers or PLCs (programmable logic controller), for control over certain functions or functions of any peripheral devices or for the storage rack 30. A PLC may optionally be fitted to the robot to carry out distributed control over one or more functions related to the tool.

A contactless power supply for the tool is indicated in Fig 2 where two tools are each shown to comprise a secondary part 13a, 13b. The communication unit 14 arranged on the tool may receive power from the contactless power supply, in this example via a connection to secondary side receiver shown as a coil 13a, b.

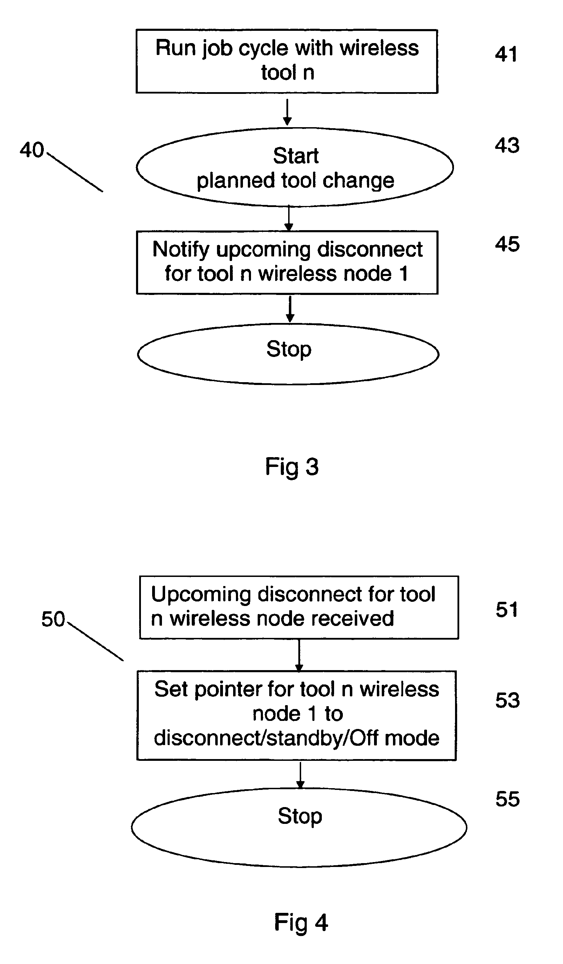

Figure 3 shows a flowchart for a method according to an embodiment 40 of the invention. When a tool change is scheduled, the overlying control system sends information about the scheduled tool change to the radio base station. Figure 3 shows a step 43 when information about a planned tool change becomes relevant, and a step 45 in which notification is sent to the control system notifying the control system about an expected dis-connection of the wireless unit of the tool identified as scheduled to be changed.

When the wireless or radio base-station reads the information regarding a tool change it "knows" that it will loose contact with a specific node in a near time and can therefore prepare a safe disconnection of the radio-link. This ensures that a planned tool change is distinguished from an unplanned loss of communication and gives the overlying control system full control of the wireless system.

Figure 4 shows a flowchart for another embodiment 50 of the invention. Notification of an upcoming tool change or disconnect is received at step 51. A pointer or other indicator at some point in the control architecture is then set to show a status for the wireless node of the tool to be changed. This status may be for example any of:
Disconnected
Standby
Off.

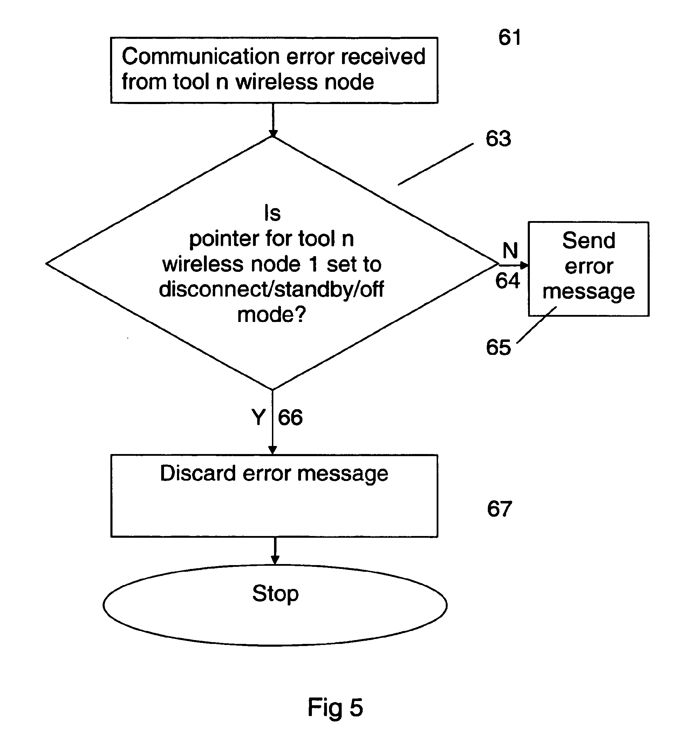

Figure 5 shows another embodiment of the invention, which may be practiced under certain circumstances. In this embodiment any error received 61 for wireless communication to the tool is checked 63 before further transmission or action is taken. If the status of the tool is in some way indicated as named in respect of Figure 4 above, shown for example as "tool change in progress" or "tool change about to take place" then the communication error is discarded at step 67. If the status is not indicated as tool change, disconnect, standby or off, N 64 then the error message is sent 65.

The robot and/or automation application with a tool according to the present invention may applied to operations such automobile assembly and to manufacturing processes used in automobile manufacturing. The robot or automation application may be used to carry out any of: welding, soldering, electrical soldering, riveting, fettling, painting, spray painting, electrostatic powder spraying, gluing, operations performed in relation to metal processing processes such as continuous casting, casting, diecasting and production methods for other materials such as plastic injection moulding, compression and/or reaction moulding or extrusion. The robot application may carry out other operations, including such as folding plate, bending plate and/or hemming plate. The robot application may comprise a plurality of tools, with wireless communication as well as without wireless communication. The tools may comprise specialised tools for welding, painting etc as well as other more general devices, grippers, claws, manipulators and so on that carry out manipulation-type tasks such as holding, placing, pick and place, and even packing of components or subcomponents in a container.

A preferred use of the wirelessly controlled removable tool for a robot application is in the application of welding vehicle bodies or other vehicle parts. Automatic tool changes are also facilitated by this invention, enabling automatic tool changes without interrupting production. Different welding tools may be exchanged by the robot so as to carry out welding tasks in different parts of a car body or with different welding rod/welding tip combinations. Thus more flexible manufacturing operations for producing different or modified versions of parts for the same type of vehicle are enabled.

In a development of an embodiment, the processor or an additional processor may carry out simple diagnostic functions as described in WO 04/030871, as well as the control functions described above. In this way data may be accessed and/or simpler diagnostic functions may be calculated and implemented locally, which greatly reduces the amount of communication that would otherwise take place between the tool and the local or central robot control unit.

One or more processors (or microprocessors or computers) present at least in a robot control unit such as 71, in a PLC, or even in part in the tool wireless unit 14, 14a-c each comprise a central processing unit CPU performing one or more steps of the methods according to one or more aspects of the invention. This is performed with the aid of one or more computer programs, which are stored at least in part in memory in, or in a memory storage accessible by, the one or more processors. The invention may also be run on one or more general purpose industrial microprocessors or computers instead of one or more specially adapted computers or processors, or devices such as FPGAs (field programmable gate arrays), CPLDs (complex programmable logic device) or ASICs (application specific integrated circuits).

The computer program comprises computer program code elements or software code portions that make the computer or processor perform the methods using equations, algorithms, data, stored values, calculations and statistical or pattern recognition methods previously described, for example in relation to Figures 3-5. A part of the program may be stored in a processor as above, but also in a ROM, RAM, PROM, EPROM or EEPROM chip, a flash memory or similar memory means. The program in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media such as Sony memory stick (TM) and other removable flash memories, memory cards, hard drives, optical media etc. may also be used. The program may also in part be supplied from a data network, including a public network such as the Internet, via a temporary hard-wire data connection and/or via the wireless communication unit 14, 14a-c arranged in the control unit, a local PLC and/or on the tool 12. Parts of the above computer programs executing in a component on the tool side may be updated and/or data or control instructions may be also provided by a temporary hard wire network connection and/or by the wireless receiver 14 or transceiver. This is especially beneficial for wireless updating of the programs in the tool side components so that updating, configuring can be carried out without requiring an operator to physically enter the robot production cell or automation application area.

The computer programs described may also be arranged in part as a distributed application capable of running on several different computers or computer systems at more or less the same time.

It should be noted that while the above describes exemplifying embodiments of the invention, there are several variations and modifications which may be made to the disclosed solution without departing from the scope of the present invention as defined in the appended claims.

## Claims

1. A method for changing a tool of an industrial robot, wherein at least one industrial robot (5) is controlled by a control unit (71) and arranged with at least one arm arranged with a tool (12) comprising a wireless communication member (14), **characterized by** sending information to said control unit about a tool change when said tool shall be removed from said arm, and thus providing information about when a break in wireless communication with the said tool is estimated to occur.

2. A method according to claim 1, **characterized by** retrieving information from the robot control unit about the next tool change and sending a signal to a wireless base station information indicating that a tool-change is planned.

3. A method according to claim 2, **characterized by** retrieving the next tool change information from the control unit, a PLC or a second robot control unit with timing information and sending a signal to a wireless base station information indicating that the tool-change is planned.

4. A method according to claim 3, **characterized by** receiving information (51) in the wireless base station about the next tool change and setting (53) an indicator or status for the tool to any from the list of: standby, disconnected, off.

5. A method according to claim 4, **characterized by** receiving in the wireless base station an error (61) for communication between wireless base station and tool and by checking (63) a status of the tool.

6. A method according to claim 5, **characterized by** receiving an error, checking a status of the tool, and discarding (67) the error message when a status or indicator is equal to any from the list of: standby, disconnected, off.

7. A method according to any of claims 3-6, **characterized by** retrieving information from any of the control unit, a PLC or a second robot control unit with timing information about the next tool change and sending to a wireless base station a signal comprising information that a tool-change is planned formatted in a predetermined data field of the communication link.

8. A method according to claim 7, **characterized by** retrieving in the wireless base station information about the next tool change and sending a signal to the tool to prepare for shutdown.

9. A method according to claim 8, **characterized by** sending a signal to the tool to move at least a part of the tool to a home position.

10. A system comprising an industrial robot and a tool, wherein at least one industrial robot is controlled by a control unit (71) and arranged with at least one arm arranged with a tool comprising a wireless communication member (14), the system further comprising means for estimating a status (40) of wireless communication between the tool and the control system **characterised in that** the status is dependent on information concerning a time when said tool shall be changed

11. A system according to claim 10, **characterised by** comprising a wireless base station for providing a communication link between the robot control unit and the tool.

12. A system according to claim 11, **characterised by** comprising means for notifying (45) the wireless base station that said tool shall be changed.

13. A system according to claim 11 or 12, **characterised by** comprising means for providing a control setting (50) dependent on when a break in wireless communication with the said tool is estimated to occur.

14. A system according to claim 11 or 12, **characterised by** comprising means for receiving (51) a notification for a tool change and for setting (53) a status indicator for the tool accordingly.

15. A system according to any of claims 10-14, **characterised by** comprising computer program means (40, 50) for receiving (51) and notifying at least the wireless base station about a tool change.

16. A system according to any of claims 10-15, **characterised by** comprising computer program means for sending a signal from the wireless base station to the tool when a tool change is to occur for the tool to prepare for shutdown.

17. A system according to claim 10, **characterised in that** at least one tool (12a, 12b comprises a contactless power supply (15) arranged for cooperation with a contactless power supply means (13) mounted on the robot.

18. A system according to claim 17, **characterised by** in that the contactless power supply is arranged for communication of one or more signals between the tool and a robot control unit by way of the contactless power supply means (13a, 13b) mounted on the robot.

19. A computer program comprising computer code means and/or software code portions for making a computer or processor perform a method according to any of claims 1-9.

20. A computer program product comprising the computer program according to claim 19 comprised in one or more computer readable media.

21. Use of a system according to any of claims 10-18 to control operations with a robot or automation application (1) in an industrial or commercial installation to carry an operation comprising any from the list of: fitting parts to automobiles, painting, welding, soldering, riveting, gluing, folding plate, bending plate, hemming plate, fettling, cutting, laser cutting, water-jet cutting, gripping an object, manipulating an object, stacking, pick and place, palletising, depalletising.

## Patentansprüche

1. Verfahren zum Wechseln eines Werkzeugs eines Industrieroboters, wobei zumindest ein Industrieroboter (5) durch eine Steuereinheit (71) gesteuert wird und mit zumindest einem Arm angeordnet ist, der mit einem Werkzeug (12) angeordnet ist, umfassend ein kabelloses Kommunikationsteil (14), **gekennzeichnet durch** das Senden von Information über einen Werkzeugwechsel an die Steuereinheit, wenn das Werkzeug von dem Arm demontiert werden soll, und somit Bereitstellen von Information darüber, wann voraussichtlich eine Unterbrechung in der kabellosen Kommunikation mit dem Werkzeug auftritt.

2. Verfahren gemäß Anspruch 1, **gekennzeichnet durch** Abrufen von Information von der Roboter-Steuereinheit über den nächsten Werkzeugwechsel und Senden eines Signals an eine kabellose Basisstationsinformation, wobei angegeben wird, dass ein Werkzeugwechsel geplant ist.

3. Verfahren gemäß Anspruch 2, **gekennzeichnet durch** Abrufen der nächsten Werkzeugwechselinformation von der Steuereinheit, einer SPS oder einer zweiten Robotersteuereinheit mit Terminierungsinformation und Senden eines Signals an eine kabellose Basisstationsinformation, wobei angegeben wird, dass der Werkzeugwechsel geplant ist.

4. Verfahren gemäß Anspruch 3, **gekennzeichnet durch** Empfangen von Information (51) über den nächsten Werkzeugwechsel in der kabellosen Basisstation und Einstellen (53) eines Indikators oder Status für das Werkzeug auf einen aus der Liste: Standby, unterbrochen, ausgeschaltet.

5. Verfahren gemäß Anspruch 4, **gekennzeichnet durch** Empfangen eines Fehlers (61) für die Kommunikation zwischen der kabellosen Basisstation und dem Werkzeug in der kabellosen Basisstation und **durch** Prüfen (63) eines Status des Werkzeugs.

6. Verfahren gemäß Anspruch 5, **gekennzeichnet durch** Erhalten eines Fehlers, Prüfen eines Status des Werkzeugs und Verwerfen (67) der Fehlernachricht, wenn ein Status oder Indikator gleich ist mit einem aus der Liste: Standby, unterbrochen, ausgeschaltet.

7. Verfahren gemäß einem der Ansprüche 3 bis 6, **gekennzeichnet durch** Abrufen von Information von der Steuereinheit, einer SPS oder einer zweiten Robotersteuereinheit mit Terminierungsinformation und Senden eines Signals an eine kabellose Basisstationsinformation, umfassend Information, dass ein Werkzeugwechsel geplant ist, der in einem vorbestimmten Datenfeld der Kommunikationsverbindung formatiert ist.

8. Verfahren gemäß Anspruch 7, **gekennzeichnet durch** Abrufen von Information über den nächsten Werkzeugwechsel in der kabellosen Basisstation und Senden eines Signals an das Werkzeug, um die Außerbetriebnahme vorzubereiten.

9. Verfahren gemäß Anspruch 8, **gekennzeichnet durch** Senden eines Signals an das Werkzeug, um zumindest einen Teil des Werkzeugs zu einer Grundstellung zu bewegen.

10. System, umfassend einen Industrieroboter und ein Werkzeug, wobei zumindest ein Industrieroboter durch eine Steuereinheit (71) gesteuert wird und mit zumindest einem Arm angeordnet ist, der mit einem Werkzeug angeordnet ist, umfassend ein kabelloses Kommunikationsteil (14), wobei das System weiterhin Mittel zum Bewerten eines Status (40) der kabellosen Kommunikation zwischen dem Werkzeug und dem Steuersystem umfasst, **dadurch gekennzeichnet, dass** der Status von Information bezüglich einer Zeit, wenn das Werkzeug gewechselt werden soll, abhängig ist.

11. System gemäß Anspruch 10, **gekennzeichnet durch** Umfassen einer kabellosen Basisstation zum Bereitstellen einer Kommunikationsverbindung zwischen der Robotersteuereinheit und dem Werkzeug.

12. System gemäß Anspruch 10, **gekennzeichnet durch** Umfassen von Mitteln zum Benachrichtigen (45) der kabellosen Basisstation, dass das Werkzeug gewechselt werden wird.

13. System gemäß Anspruch 11 oder 12, **gekennzeichnet durch** Umfassen von Mitteln zum Bereitstellen einer Steuereinstellung (50), welche davon abhängig ist, wann eine Unterbrechung in der kabellosen Kommunikation mit dem Werkzeug voraussichtlich auftritt.

14. System gemäß Anspruch 11 oder 12, **gekennzeichnet durch** Umfassen von Mitteln zum Empfangen (51) einer Mitteilung für einen Werkzeugwechsel und zum entsprechenden Einstellen (53) eines Status/Indikators für ein Werkzeug.

15. System gemäß einem der Ansprüche 10 bis 14, **gekennzeichnet durch** Umfassen von Computerprogramm-Mitteln (40, 50) zum Empfangen (51) und Benachrichtigen zumindest der kabellosen Basisstation über einen Werkzeugwechsel.

16. System gemäß einem der Ansprüche 10 bis 15, **gekennzeichnet durch** Umfassen von Computerprogramm-Mitteln zum Senden eines Signals von der kabellosen Basisstation zu dem Werkzeug, wenn ein Werkzeugwechsel für das Werkzeug auftreten wird, um die Außerbetriebnahme vorzubereiten.

17. System gemäß Anspruch 10, **gekennzeichnet dadurch, dass** zumindest ein Werkzeug (12a, 12b) eine kontaktfreie Energieversorgung (15) umfasst, welche zur Zusammenarbeit mit einem kontaktfreien, auf dem Roboter gelagerten Energieversorgungsmittel angeordnet ist.

18. System gemäß Anspruch 17, **gekennzeichnet dadurch, dass** die kontaktfreie Energieversorgung zur Kommunikation eines oder mehrerer Signale zwischen dem Werkzeug und einer Robotersteuereinheit mittels der kontaktfreien, auf dem Roboter gelagerten Energieversorgungsmittel angeordnet ist.

19. Computerprogramm, umfassend Computer-Code-Mittel und/oder Software-Code-Bereiche, um einen Computer oder Prozessor dazu zu bringen, ein Verfahren gemäß einem der Ansprüche 1 bis 9 auszuführen.

20. Computerprogramm-Produkt, umfassend das Computerprogramm gemäß Anspruch 19, beinhaltet in einem oder mehreren computerlesbaren Medien.

21. Verwendung eines Systems gemäß einem der Ansprüche 10 bis 18, um Arbeitsgänge mit einem Roboter oder einer Automatisierungsanwendung (1) in einer industriellen oder kommerziellen Anlage zu steuern, um einen Arbeitsgang auszuführen, der einen aus der Liste umfasst: Anbringen von Teilen an Fahrzeugen, Lackieren, Schweißen, Löten, Nieten, Kleben, Falten von Blech, Biegen von Blech, Falzen von Blech, Putzschleifen, Schneiden, Laserschneiden, Wasserstrahlschneiden, Greifen eines Gegenstands, Verarbeiten eines Gegenstands, Stapeln, Bestücken, Palletieren, Entpalletieren.

## Revendications

1. Procédé pour changer un outil d'un robot industriel, dans lequel au moins un robot industriel (5) est commandé par une unité de commande (71) et muni d'au moins un bras pourvu d'un outil (12) comprenant un élément de communication sans fil (14), **caractérisé par** le fait d'envoyer une information à ladite unité de commande concernant un changement d'outil lorsque ledit outil doit être retiré dudit bras, et ainsi de fournir une information sur le moment estimé d'une rupture de la communication sans fil avec ledit outil.

2. Procédé selon la revendication 1, **caractérisé par** le fait de récupérer une information de l'unité de commande du robot concernant le prochain changement d'outil et d'envoyer un signal à une station de base sans fil, information indiquant qu'un changement d'outil est planifié.

3. Procédé selon la revendication 2, **caractérisé par** le fait de récupérer l'information de changement d'outil suivante de l'unité de commande, d'un PLC ou d'une deuxième unité de commande de robot avec une information de minutage et d'envoyer un signal à une station de base sans fil, information indiquant que le changement d'outil est planifié.

4. Procédé selon la revendication 3, **caractérisé par** le fait de recevoir une information (51) dans la station de base sans fil concernant le prochain changement d'outil puis de mettre (53) un indicateur ou état pour l'outil sur n'importe quelle valeur suivante : attente, déconnecté, arrêt.

5. Procédé selon la revendication 4, **caractérisé par** le fait de recevoir dans la station de base sans fil une erreur (61) pour la communication entre station de base sans fil et outil et de vérifier (63) un état de l'outil.

6. Procédé selon la revendication 5, **caractérisé par** le fait de recevoir une erreur, de vérifier un état de l'outil et de rejeter (67) le message d'erreur lorsqu'un état ou indicateur est égal à l'une quelconque des valeurs suivantes : attente, déconnecté, arrêt.

7. Procédé selon l'une quelconque des revendications 3 à 6, **caractérisé par** le fait de récupérer une information de l'unité de commande, d'un PLC ou d'une deuxième unité de commande de robot avec une information de minutage concernant le prochain changement d'outil et d'envoyer à une station de base sans fil un signal comprenant une information indiquant qu'un changement d'outil est planifié, formatée dans un champ de données prédéterminé de la liaison de communication.

8. Procédé selon la revendication 7, **caractérisé par** le fait de récupérer dans la station de base sans fil une information sur le prochain changement d'outil et d'envoyer un signal à l'outil pour le préparer à une mise en arrêt.

9. Procédé selon la revendication 8, **caractérisé par** le fait d'envoyer un signal à l'outil pour déplacer au moins une partie de l'outil jusqu'à une position de départ.

10. Système comprenant un robot industriel et un outil, dans lequel au moins un robot industriel est commandé par une unité de commande (71) et muni d'au moins un bras pourvu d'un outil comprenant un élément de communication sans fil (14), le système comprenant en outre un moyen permettant d'estimer un état (40) de la communication sans fil entre l'outil et le système de commande, **caractérisé en ce que** l'état dépend d'une information concernant le moment où ledit outil doit être changé.

11. Système selon la revendication 10, **caractérisé en ce qu'**il comprend une station de base sans fil pour fournir une liaison de communication entre l'unité de commande de robot et l'outil.

12. Système selon la revendication 11, **caractérisé en ce qu'**il comprend un moyen permettant de signaler (45) à la station de base sans fil que ledit outil doit être changé.

13. Système selon la revendication 11 ou 12, **caractérisé en ce qu'**il comprend un moyen permettant de fournir un réglage de commande (50) dépendant du moment estimé d'une rupture de la communication sans fil avec ledit outil.

14. Système selon la revendication 11 ou 12, **caractérisé en ce qu'**il comprend un moyen permettant de recevoir (51) une notification pour un changement d'outil et de régler (53) en conséquence un indicateur d'état pour l'outil.

15. Système selon l'une quelconque des revendications 10 à 14, **caractérisé en ce qu'**il comprend un moyen formant programme d'ordinateur (40, 50) pour recevoir (51) et signaler au moins à la station de base sans fil un changement d'outil.

16. Système selon l'une quelconque des revendications 10 à 15, **caractérisé en ce qu'**il comprend un moyen formant programme informatique pour envoyer un signal de la station de base sans fil à l'outil lorsqu'un changement d'outil doit se produire pour que l'outil se prépare à une mise en arrêt.

17. Système selon la revendication 10, **caractérisé en ce qu'**au moins un outil (12a, 12b) comprend une alimentation sans contact (15) adaptée pour coopérer avec un moyen d'alimentation sans contact (13) monté sur le robot.

18. Système selon la revendication 17, **caractérisé en ce que** l'alimentation sans contact est adaptée pour la communication d'un ou de plusieurs signaux entre l'outil et une unité de commande de robot à l'aide du moyen d'alimentation sans contact (13a, 13b) monté sur le robot.

19. Programme informatique comprenant un moyen de code d'ordinateur et/ou des parties de code logiciel pour faire exécuter par un ordinateur ou un processeur un procédé selon l'une quelconque des revendications 1 à 9.

20. Produit de programme informatique comprenant le programme informatique de la revendication 19 compris dans un ou plusieurs supports lisibles par un ordinateur.

21. Utilisation d'un système selon l'une quelconque des revendications 10 à 18 pour commander les opérations avec un robot ou une application automatisée (1) dans une installation industrielle ou commerciale pour exécuter une opération comprenant l'une quelconque des opérations suivantes : monter des pièces sur des automobiles, peindre, souder, braser, riveter, coller, plier une tôle, courber une tôle, rabattre une tôle, ébarber, couper, couper au laser, couper au jet d'eau, saisir un objet, manipuler un objet, empiler, lever et placer, palettiser, dépalettiser.
